# EUROPEAN PATENT APPLICATION

(11) **EP 4 071 034 A1**
(43) Date of publication of application: **12.10.2022**
(21) Application number: 22165615.0
(22) Date of filing: 30.03.2022
(51) Int. Cl.: B62D 35/00

(54) **SPOILER AND VEHICLE TAILGATE ASSEMBLY**

(30) Priority: 02.04.2021 CN 202110360105
(71) Applicant: PSA Automobiles SA, 78300 Poissy (FR)
(72) Inventor: WANG, ZI YE, SHANGHAI, 200030 (CN); LI, BING, SHANGHAI, 200030 (CN); SUN, WEI, SHANGHAI, 200030 (CN); LI, CAI YUN, SHANGHAI, 200030 (CN); YU, YAO, SHANGHAI, 200030 (CN)

(57) **Abstract**

A spoiler (10) is provided according to the present application. The spoiler (10) is adapted to be provided on the top of a vehicle tailgate assembly (100). The spoiler (10) is an integral single hollow member and includes:
a flow guide part (11) provided with an arc-shaped recess, and the arc-shaped recess having a guiding surface (1110) smoothly extending from the top of the spoiler (10) to the bottom of the spoiler (10);

## Description

### RELATED FIELD

The present application generally relates to the field of vehicle body parts, and more particularly, to a spoiler and a vehicle tailgate assembly including the spoiler.

### BACKGROUND

A vehicle spoiler refers to a component similar to an inverted aircraft empennage mounted on the tailgate of a vehicle, and the component at this position is also called a tail wing.

It is already known that a vehicle will encounter air resistance in the process of traveling, and this resistance can be divided into three component forces: longitudinal, lateral and vertically upward. The faster the vehicle speed, the greater the air resistance. In order to effectively reduce and overcome the influence of air resistance when the vehicle is traveling at high speed, a spoiler is provided at the rear of the vehicle, which is configured to cause the air flow to produce a fourth force, that is, adhesion force to the ground, on the vehicle. This adhesion force can counterbalance part of the aerodynamic lift and restrain the vehicle from lifting, so that the vehicle can travel attaching to the road, thereby improving the traveling stability of the vehicle. In addition to improving traveling stability, the spoiler also helps to save energy consumption.

From a structural point of view, while improving traveling stability and saving energy consumption, the spoiler should occupy an area which can minimize the impact on the driver's rear vision. For a vehicle tailgate assembly with glass, the spoiler preferably also serves to guide the airflow to the rear of the vehicle body and remove dust from the tailgate glass by means of the airflow, so as to further avoid dust from adhering and further affecting the driver's rear vision. In addition, from the material point of view, in the existing design, there are metal spoiler and plastic spoiler. The metal spoiler includes an outer spoiler plate, an inner spoiler plate, and even a middle reinforcing spoiler plate. The rigidity of the metal spoiler is excellent, but the structure thereof is complicated and the weight thereof is heavy, and some fastener installation points may be rusted. The plastic spoiler is generally formed by the injection molding process. The spoiler formed by the injection molding process generally has a poor appearance and poor rigidity. For the vehicle body design with lightweight requirements, the weight of the spoiler formed by the injection molding process cannot meet the requirements neither.

### SUMMARY

An object of the present application is to overcome the above-mentioned disadvantages of the prior art, and to propose a spoiler and a vehicle tailgate assembly including the spoiler, wherein the spoiler is a single hollow member, and has a light weight and smooth lines.

To this end, according to a first aspect of the present application, a spoiler is provided, which is adapted to be provided on the top of a vehicle tailgate assembly. The spoiler is an integral single hollow member and includes:
a flow guide part provided with an arc-shaped recess, wherein the arc-shaped recess has a guiding surface smoothly extending from the top of the spoiler to the bottom of the spoiler; and
a mounting part symmetrically provided at two ends of the flow guide part;
wherein the mounting part is adapted to be mounted to the vehicle tailgate assembly and forms an air flow gap on the vehicle tailgate assembly by means of the guiding surface of the flow guide part.

According to the above technical concept, the present application may further include one or more of the following optional forms.

In some optional forms, the cross-sectional size of the flow guide part is smaller than that of the mounting part.

In some optional forms, each mounting part is provided with a plurality of embedded fasteners and at least one pre-positioning element, and the plurality of embedded fasteners are arranged at intervals along the mounting part.

In some optional forms, the mounting part is provided with a bent portion away from the flow guide part, and at least two embedded fasteners are arranged adjacent to the bent portion.

In some optional forms, the mounting part is further provided with an anti-vibration element, and the anti-vibration element extends along at least a portion of the edge of the mounting part.

In some optional forms, the spoiler is a single member manufactured by hollow blow-molding process, and the embedded fasteners and the pre-positioning element are embedded in the spoiler during the hollow blow-molding process.

In some optional forms, the embedded fasteners are nuts, and the spoiler hermetically surrounds the nuts.

In some optional forms, the pre-positioning element includes a head extending away from the spoiler, and the head includes an insertion guiding surface and a clamping portion.

According to another aspect of the present application, a vehicle tailgate assembly is further provided, which at least includes a tailgate inner panel, a carrying base, and the spoiler according to the first aspect of the present application. The carrying base is symmetrically connected at two ends of the top of the tailgate inner panel, and the mounting part of the spoiler is joined with the carrying base to form an air flow gap by the guiding surface of the flow guide part.

The spoiler of the present application is an integral single hollow member, which not only reduces the self-weight of the spoiler, but also allows the spoiler to have a better streamline shape. The mounting part of the spoiler is arranged at two ends of the flow guide part, forming the air flow gap on the vehicle tailgate assembly. Further, the shielding of the spoiler on the vehicle tailgate assembly is minimized through the reasonable arrangement of installation points on the mounting part, so as to avoid affecting the driver's rear vision.

### BRIEF DESCRIPTION OF THE DRAWINGS

Other features and advantages of the present application will be readily understood through the following preferred embodiments described in detail with reference to the accompanying drawings, in which the same reference numerals indicate the same or similar components.
FIG. 1 is a schematic view of a vehicle tailgate assembly including a spoiler according to an embodiment of the present application;
FIG. 2 is the schematic view of the spoiler disassembled from the vehicle tailgate assembly shown in FIG. 1;
FIG. 3 is a partially exploded view of the vehicle tailgate assembly without the spoiler;
FIG. 4a is a top view of the spoiler according to an embodiment of the present application, FIG. 4b is a sectional view at section line A-A in FIG. 4a;
FIG. 5a is a bottom view of the spoiler shown in FIG. 4a, FIG. 5b is a partial enlarged view at part B in FIG. 5a;
FIG. 6a is a schematic view of the spoiler mounted to the vehicle; FIG. 6b is a sectional view at section line C-C in FIG. 6a, which shows a pre-positioning element; FIG. 6c is a partial enlarged view at part D in FIG. 6b;
FIG. 7a is another schematic view of the spoiler mounted to the vehicle; FIG. 7b is a sectional view at section line E-E in FIG. 7a, which shows an embedded fastener; FIG. 7c is a partial enlarged view at part F in FIG. 7b; and FIG. 7d, which is similar to FIG. 7c, is a schematic view of the embedded fastener not connected to the vehicle.

### DETAILED DESCRIPTION

The implementation and usage of the embodiments are discussed in detail below in conjunction with the drawings. However, it is conceivable that the specific embodiments discussed herein are merely intended to illustrate specific ways of implementing and using the present application, and are not intended to limit the scope of the present application. When describing structures and positions of components, the direction-related expressions herein, such as "upper", "lower", "top", and "bottom", are not absolute, but relative. When the components are arranged as shown in the drawings, these direction-related expressions are appropriate, but when the positions of these components in the drawings are altered, these direction-related expressions should be altered accordingly.

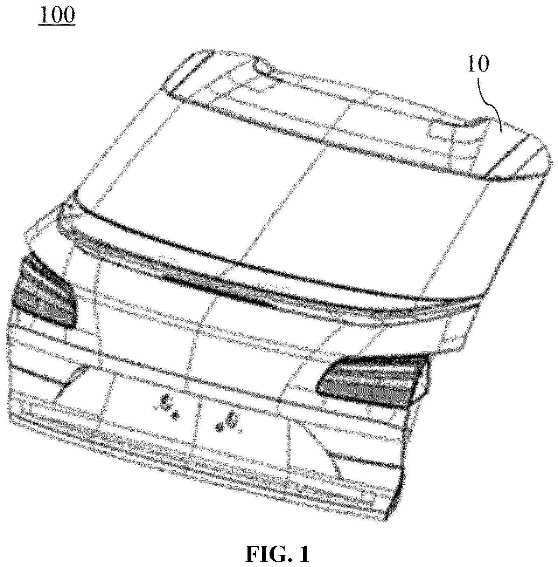

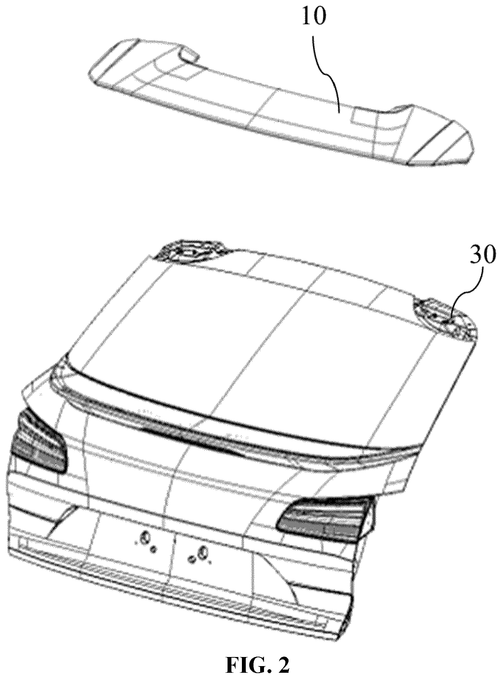

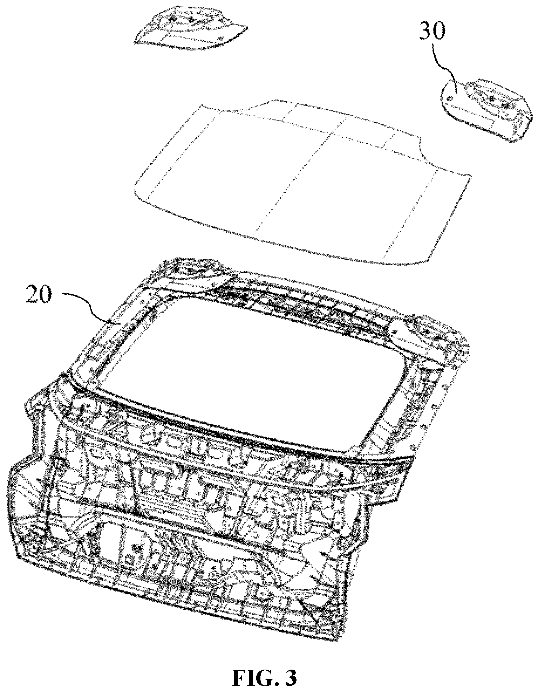

FIG. 1-3 show a vehicle tailgate assembly 100 according to an embodiment of the present application. The vehicle tailgate assembly 100 at least includes a spoiler 10, a tailgate inner panel 20, and two carrying bases 30. The two carrying bases 30 are symmetrically connected at two ends of the top of the tailgate inner panel 20, and the spoiler 10 is connected to the two carrying bases 30.

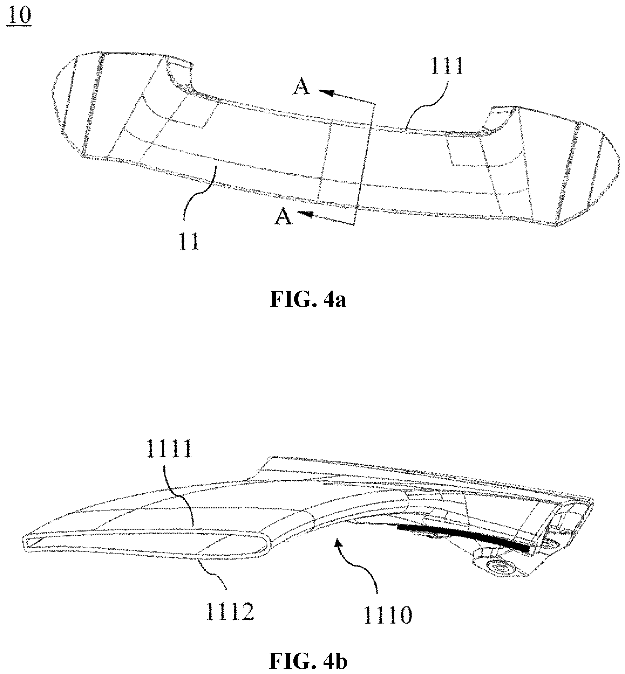

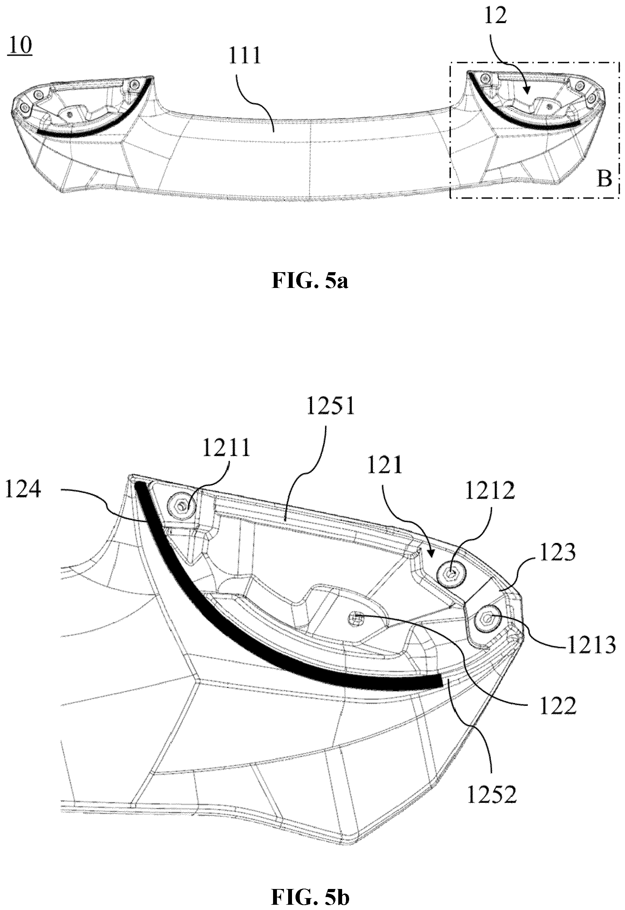

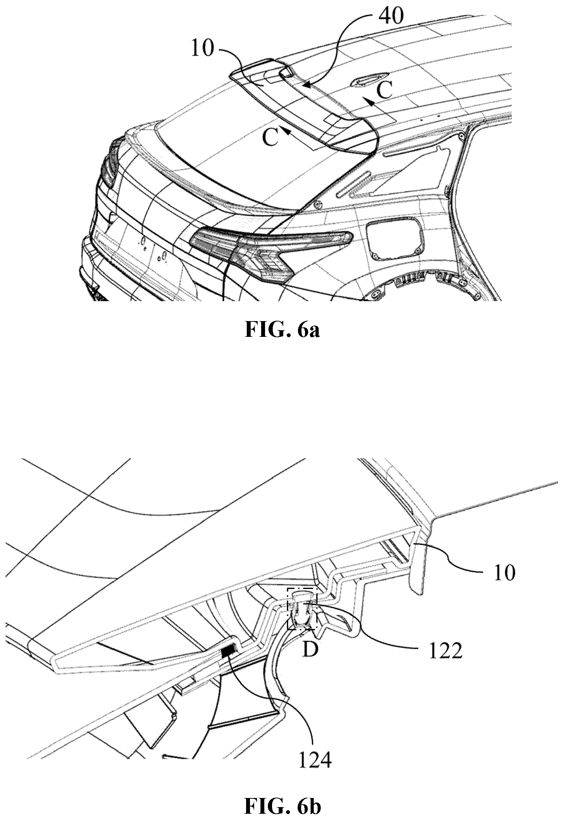

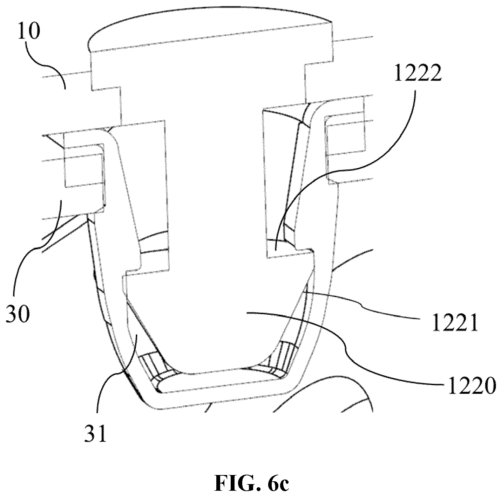

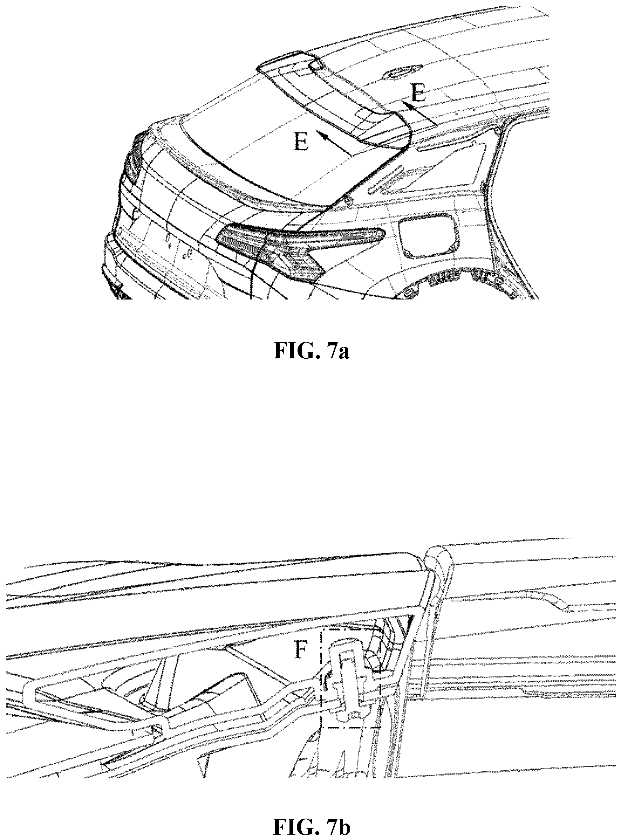

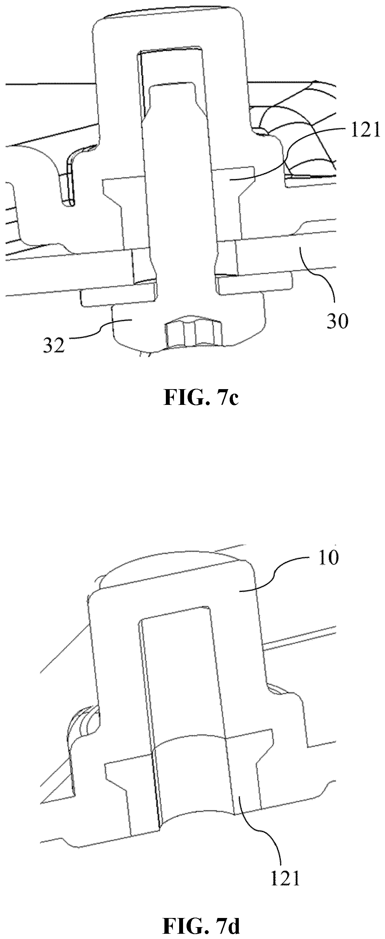

Specifically, the spoiler 10 is arranged on the top of the vehicle tailgate assembly 100 by being connected to the carrying bases 30, as shown in FIG. 6a and 7a of the spoiler 10 installed on the vehicle. The top of the spoiler 10 is defined as the part that is visible from the outside of the vehicle, that is, the top of the spoiler 10 faces away from the tailgate inner panel 20. The bottom of the spoiler 10 is defined as the part that is not easily visible from the outside of the vehicle, that is, the bottom of the spoiler 10 faces the tailgate inner panel 20. FIG. 4a is a top view of the spoiler 10, and FIG. 5a is a bottom view of the spoiler 10. As shown in the two figures, the spoiler 10 includes a flow guide part 11 and a mounting part 12. The mounting part 12 is symmetrically provided at two ends of the flow guide part 11. Specifically, the flow guide part 11 is provided with an arc-shaped recess 111. With reference to the sectional view shown in FIG. 4b, the arc-shaped recess 111 has a guiding surface 1110 smoothly extending from the top of the spoiler 10 to the bottom of the spoiler 10. The guiding surface 1110 at least includes a top guiding surface 1111 and a bottom guiding surface 1112. In a preferred embodiment, as shown in FIG. 6a, the guiding surface 1110 of the flow guide part 11 is configured to form an air flow gap 40 on the vehicle tailgate assembly 100, so as to guide the airflow to wash away the dust on the vehicle tailgate assembly 100. More specifically, for a vehicle tailgate assembly with glass, the air flow gap is formed between the bottom guiding surface 1112 of the flow guide part 11 and the glass to guide the air flow to wash away dust on the glass, so that the rear wiper can be dispensed with. In other words, when the air flow reaches the arc-shaped recess 111 of the flow guide part 11, the air flow is divided on the guiding surface 1110, one part flows along the top guiding surface 1111 ,and the other part enters the air flow gap 40 along the bottom guiding surface 1112. In addition, as shown in the sectional view of FIG. 4b, the spoiler 10 is an integral single hollow member. Preferably, the spoiler 10 is a single member manufactured by hollow blow-molding process. Through the above process, the spoiler 10 will have a lighter weight, a better streamline shape and a better sectional bending resistance. In an optional embodiment, the cross-sectional size of the flow guide part 11 is set to be smaller than that of the mounting part 12 to form an appropriate air flow gap 40. In addition, since the mounting part 12 is arranged at two ends of the flow guide part 11, there is no need to provide installation points on the flow guide part 11, so the flow guide part 11 can have a smaller cross-sectional size while ensuring the cross-sectional bending resistance of the flow guide part 11, which helps reduce the impact of the spoiler 10 on the driver's rear vision.

Referring to FIG. 5a and FIG. 5b, the mounting part 12 of the spoiler 10 is provided with a plurality of embedded fasteners 121 and at least one pre-positioning element 122. By way of example, only one pre-positioning element 122 is provided. The pre-positioning element 122 is preferably arranged in the middle of the mounting part 12, in order to ensure that, when the mounting part 12 is in contact with the carrying base 30, the mounting part 12 is pre-tightened on the carrying base 30 by the pre-positioning element 122. Specifically, referring to the cross-sectional views of the pre-positioning element 122 as shown in FIG. 6a to FIG. 6c, the pre-positioning element 122 includes a head 1220 extending away from the spoiler 10, and the head 1220 includes an insertion guiding surface 1221 and a clamping portion 1222, so as to smoothly guide the pre-positioning element 122 to be inserted into and clamped in a pre-positioning groove 31 of the carrying base 30. When the spoiler 10 is pre-tightened on the carrying base 30 by the pre-positioning element 122 of the mounting parts 12 at the two ends of the spoiler 10, a certain external force is required to separate the spoiler 10 from the carrying base 30. After the pre-tightening, the spoiler 10 can be further fastened by embedded fasteners 121.

Referring to FIG. 5a to FIG. 5b, a plurality of embedded fasteners 121 are arranged at intervals along the mounting part 12. Optionally, the mounting part 12 is provided with three embedded fasteners, namely a first embedded fastener 1211, a second embedded fastener 1212 and a third embedded fastener 1213. In addition, the first embedded fastener 1211, the second embedded fastener 1212 and the third embedded fastener 1213 are all constructed as nuts. Furthermore, the embedded fasteners may all be constructed as bolts; or, part of the embedded fasteners may be constructed as nuts, and other part of the embedded fasteners may be constructed as bolts. Specifically, the mounting part 12 is provided with a bent portion 123 away from the arc-shaped recess 111 of the flow guide part 11, and at least two embedded fasteners are arranged adjacent to the bent portion 123. In the exemplary embodiment shown in FIG. 5b, the second embedded fastener 1212 and the third embedded fastener 1213 are arranged adjacent to the bent portion 123. The provision of the bent portion 123 allows an installation direction set by the third embedded fastener 1213 to be different from that set by the second embedded fastener 1212. For example, the third embedded fastener 1213 is installed substantially in the width direction of the vehicle. In other words, the structural strength of the mounting part can be improved by providing a fastener that is loaded with a force substantially in the width direction of the vehicle at a position of each mounting part 12 close to the vehicle side. For example, when the vehicle is in a fully automatic vehicle washing condition, the above configuration ensures that the spoiler 10 can withstand the pressing force exerted on it by the washing brush from two sides of the vehicle and that the spoiler 10 will not be bent and deformed in the width direction of the vehicle. Further, the first embedded fastener 1211 is arranged as close to the middle of the spoiler 10 as possible, that is, as close to the flow guide part 11 as possible, so that the first embedded fastener 1211, the second embedded fastener 1212 and the third embedded fastener 1213 form a triangle with a larger area, which ensures the stability of the connection without further increasing the number of embedded fasteners.

With reference to FIG. 7a to FIG. 7d, taking one of the embedded fasteners 121 as an example, a fastening bolt 32 passes through the carrying base 30 to engage with the embedded fastener 121, the embedded fastener 121 constructed as a nut is preferably embedded in the spoiler 10 during the hollow blow-molding process, and the spoiler 10 hermetically surrounds the embedded fastener 121. Further preferably, the pre-positioning element 122 and the embedded fastener 121 are embedded in the spoiler 10 in the hollow blow-molding process at the same time. In this way, the spoiler 10 formed integrally has a sealed hollow chamber, thereby isolating the dust and water vapor from the hollow chamber. Optionally, the pre-positioning element 122 is connected to the spoiler 10 by means of bonding.

In a further optional embodiment, as shown in FIG. 5b and FIG. 6b, the mounting part 12 is further provided with an anti-vibration element 124, and the anti-vibration element 124 extends along at least a portion of the edge of the mounting part. Specifically, the anti-vibration element 124 may be selected as anti-vibration foam, the first embedded fastener 1211, the second embedded fastener 1212 and the third embedded fastener 1213 are optionally arranged along a front edge 1251 (also referred to as an upper edge) of the mounting part 12, and the anti-vibration element 124 is optionally arranged along a rear edge 1252 (also referred to as a lower edge) of the mounting part 12. Two ends of the rear edge 1252 respectively extend to the corresponding two ends of the front edge 1251 in accordance with the carrying base 30. The anti-vibration element 124 is arranged in an arc shape along the rear edge 1252 to effectively resist vibration by disposing the anti-vibration element 124 at the position where the rear edge 1252 of the mounting part 12 contacts the carrying base 30. It is worth noting that, through the triangular arrangement of the first embedded fastener 1211, the second embedded fastener 1212 and the third embedded fastener 1213 along the front edge 1251 of the mounting part 12, and through the middle arrangement of the pre-positioning element 122, the rear edge 1252 of the mounting part 12 can be as close to the front edge 1251 as possible, so as to reduce the contact area between the mounting part 12 and the carrying base 30, and further avoid the influence of the spoiler 10 on the driver's rear vision.

The spoiler of the present application is an integral single hollow member, which not only can easily control the gap and flushness of the spoiler on the vehicle tailgate assembly, allowing the mounting part of the spoiler to be completely fitted with the carrying base, but also can reduce the weight of the spoiler to the greatest extent and ensure sufficient cross-sectional bending resistance.

It should be understood that the embodiments shown in FIGS. 1 to 7d only illustrate the optional shape, size and arrangement of each optional component of the spoiler according to the present application. However, these embodiments are merely intended to illustrate, rather than limit. Other shapes, sizes and arrangements may be adopted without departing from the idea and scope of the present application.

The technical contents and technical features of the present application have been disclosed above. However, it can be understood that, those skilled in the art can make various changes and improvements to the above-disclosed concept under the creative concept of the present application, and all these various changes and improvements still fall within the protection scope of the present application. The description of the foregoing embodiments is exemplary rather than restrictive, and the protection scope of the present application is determined by the appended claims.

## Claims

1. A spoiler adapted to be provided on the top of a vehicle tailgate assembly, wherein the spoiler is an integral single hollow member and comprises:
a flow guide part provided with an arc-shaped recess, and the arc-shaped recess having a guiding surface smoothly extending from the top of the spoiler to the bottom of the spoiler;
a mounting part symmetrically provided at two ends of the flow guide part;
wherein the mounting part is adapted to be mounted to the vehicle tailgate assembly and forms an air flow gap on the vehicle tailgate assembly by means of the guiding surface of the flow guide part.

2. The spoiler according to claim 1, wherein the cross-sectional size of the flow guide part is smaller than that of the mounting part.

3. The spoiler according to claim 1, wherein each mounting part is provided with a plurality of embedded fasteners and at least one pre-positioning element, and the plurality of embedded fasteners are arranged at intervals along the mounting part.

4. The spoiler according to claim 3, wherein the mounting part is provided with a bent portion away from the flow guide part, and at least two embedded fasteners are arranged adjacent to the bent portion.

5. The spoiler according to claim 3, wherein the mounting part is further provided with an anti-vibration element, and the anti-vibration element extends along at least a portion of the edge of the mounting part.

6. The spoiler according to any one of claims 3 to 5, wherein the spoiler is a single member manufactured by hollow blow-molding process, and the embedded fasteners and the pre-positioning element are embedded in the spoiler during the hollow blow-molding process.

7. The spoiler according to claim 6, wherein the embedded fasteners are nuts, and the spoiler hermetically surrounds the nuts.

8. The spoiler according to claim 6, wherein the pre-positioning element comprises a head extending away from the spoiler, and the head comprises an insertion guiding surface and a clamping portion.

9. A vehicle tailgate assembly, wherein the vehicle tailgate assembly at least comprises a tailgate inner panel, a carrying base, and the spoiler according to any one of claims 1 to 8, the carrying base is symmetrically connected at two ends of the top of the tailgate inner panel, and the mounting part of the spoiler is joined with the carrying base to form an air flow gap by the guiding surface of the flow guide part.
